# EUROPÄISCHE PATENTANMELDUNG

(11) **EP 1 538 423 A2**
(43) Veröffentlichungstag der Anmeldung: **08.06.2005**
(21) Anmeldenummer: 04028570.2
(22) Anmeldetag: 02.12.2004
(51) Int. Cl.: G01D 5/347

(54) **Taktscheibenbefestigung**

(30) Priorität: 02.12.2003 DE 10356224
(71) Anmelder: PWB-Ruhlatec Industrieprodukte GmbH, 99846 Seebach (DE)
(72) Erfinder: Braun, Richard, 53842 Troisdorf (DE)
(74) Vertreter: Müller-Wolff, Thomas, Dipl.-Ing.

(57) **Zusammenfassung**

Die Erfindung betrifft eine Taktscheibenbefestigung für ein Encodersystem. Es besteht aus einer Taktscheibennabe (1), die auf einer Motorwelle (2) aufsteckbar ist und an der eine Taktscheibe (3) befestigt ist. Erfindungsgemäß besteht die Taktscheibennabe aus einem metallischen und wärmeleitenden Werkstoff, der vorzugsweise einseitig mit einem Kunststoff-Isolationsmaterial (4) beschichtet ist. In der Flanschebene (1a) der Taktscheibennabe (1) sind Vorsprünge oder Nasen (5, 6, 7) angeordnet, die in entsprechend ausgebildeten Vertiefungen, Aussparungen oder Einschnitten (3a, 3b) der Taktscheibe (3) eingreifen.

## Beschreibung

Die Erfindung betrifft eine Taktscheibenbefestigung für Encodersysteme, bestehend aus der Taktscheibe, einer Taktscheibennabe und gegebenenfalls weiterer Befestigungsmittel wie Kleber, Schraub- oder Klemmverbindungen.

Encodersysteme müssen hohen Genauigkeitsanforderungen auch unter wechselnden Temperatureinflüssen genügen. Die Temperaturschwankungen resultieren aus den hohen Drehzahlen im Bereich von 10.000 U/min, die in Verbindung mit mechanischen Einflüssen wie z.B. Reibungskräften an Kupplungen- und Getriebeanschlüssen auftreten.

Aufgabe der vorliegenden Erfindung ist es eine Taktscheibenbefestigung weiter zu entwickeln, die den eingangs genannten Anforderungen genügt und einen verbesserten Wärmeabfluss aus dem Encodersystem ermöglicht.

Diese Aufgabe wird erfindungsgemäß durch die in den Patentansprüchen angegebenen Merkmale gelöst. Es hat sich gezeigt, dass eine Taktscheibennabe aus einem einseitig kunststoffbeschichteten Blech einen hohen Wärmeabfluss ermöglicht, wobei durch die mechanische Verklammerung mit der Taktscheibe eine spielfreie Übertragung von wechselnden Drehmomenten auch unter variierenden Temperatureinflüssen garantiert wird.

Im folgenden wird die Erfindung anhand mehrerer Ausführungsbeispiele näher erläutert. Es zeigen:
- Fig. 1: Gesamtansicht der erfindungsgemäßen Taktscheibenbefestigung in einem Encodersystem.
- Fig. 2: Vergrößerter Teilausschnitt aus dem Bereich der Taktscheibenbefestigung.
- Fig. 3: Alternative Ausgestaltung einer erfindungsgemäßen Taktscheibenbefestigung in Explosivdarstellung (ungefügt).
- Fig. 4: Erfindungsgemäße Taktscheibenbefestigung in Vorderansicht (gefügt).
- Fig. 5: Querschnitt durch eine weitere alternative Ausgestaltung der erfindungsgemäßen Taktscheibenbefestigung (gefügt).
- Fig. 6: Erfindungsgemäße Taktscheibenbefestigung nach Fig. 5 in Rückansicht (gefügt).

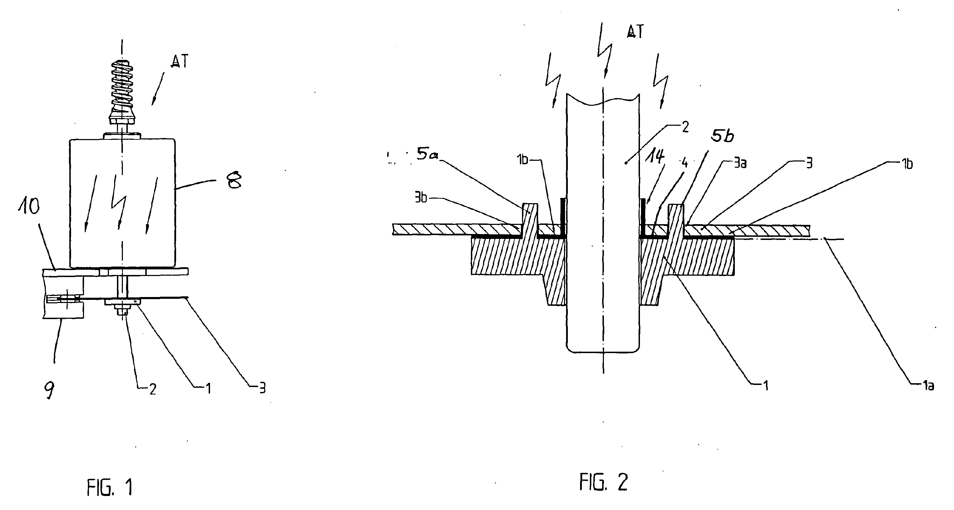

In der Gesamtansicht gemäß Figur 1 ist die Taktscheibennabe 1 auf der Motorwelle 2 eines Motors 8 in montiertem Zustand dargestellt. Bei einer Drehbewegung der Motorwelle 2 wird die Taktscheibe 3 über die Taktscheibennabe 1 mitgenommen und dreht sich im Spalt eines C-förmig ausgebildeten Motor-Sensor-Bauteils 9, das auf einer PCB-Leiterplatte 10 befestigt ist.

In dem vergrößerten Teilausschnitt ist das erfindungsgemäße Taktscheibenbefestigungs-Prinzip erkennbar. Auf der Motorwelle 2 wird die Taktscheibennabe spielfrei aufgesteckt und in den Aussparungen 3a, 3b der Taktscheibe 3 befestigt. Die Befestigung erfolgt formschlüssig durch Vorsprünge in Form von Nasen 5a, 5b, wobei zwischen der Taktscheibennabe 1 und der Taktscheibe 3 ein Kunststoffisolationsmaterial 4 angeordnet ist. Zwischen Taktscheibe 3 und Motorwelle 2 kann vorzugsweise eine Kunststoffschicht 14 zur Wärmeisolierung eingebracht werden.

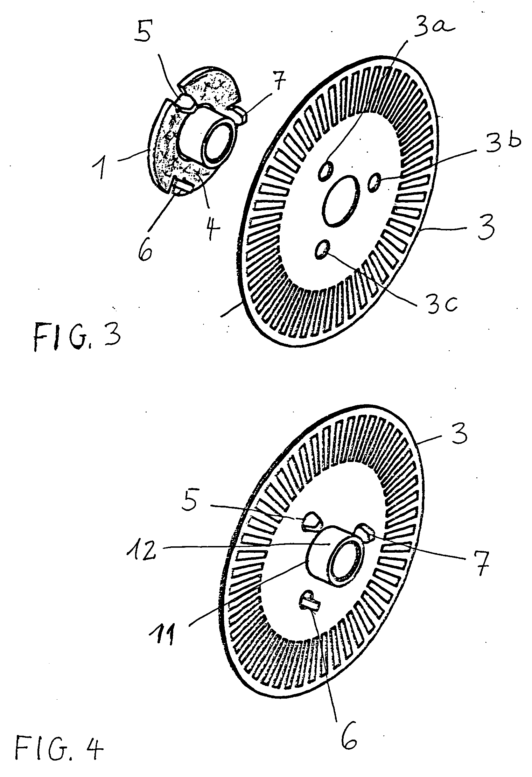

In Figur 3 sind Taktscheibennabe 1 und Taktscheibe 3 vor dem Zusammenfügen dargestellt. An der Taktscheibennabe 1 sind die Nasen 5, 6, 7 so ausgerichtet, dass sie in die entsprechenden Bohrungen 3a, 3b, 3c der Taktscheibe 3 eingefügt werden können.

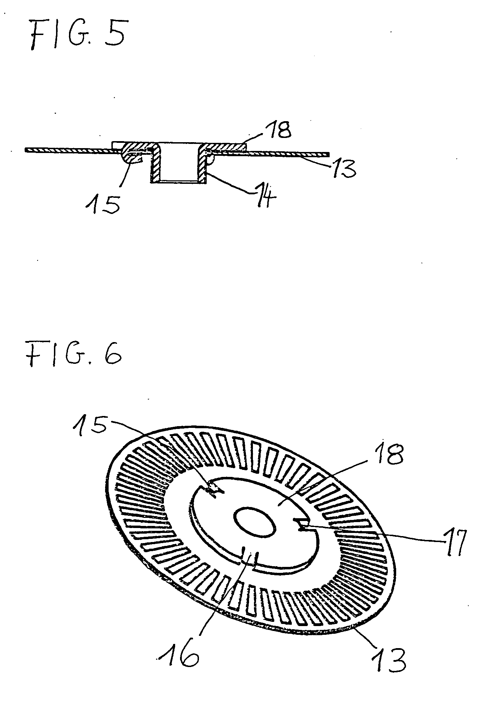

Nach dem Zusammenfügen von Taktscheibennabe 1 und Taktscheibe 3 werden die Nasen 5, 6, 7 so verformt, dass eine Verklammerung eintritt. Dieser Zustand ist in Figur 4 dargestellt, wobei die Taktscheibe 3 im gefügten Zustand in der Vorderansicht zu sehen ist. Im Spalt 11 zwischen Nabenoberfläche 12 und Taktscheibe 3 befindet sich kein Isoliermaterial.

Figur 5 zeigt anhand eines weiteren Ausführungsbeispiels die Situation nach dem Fügen und Umbiegen der Nasen 15, 16, 17. Dadurch wird die Taktscheibennabe 18 mit der Taktscheibe 13 spielfrei und dauerhaft befestigt. Man erkennt in der Querschnittsdarstellung von Figur 5, dass die Taktscheibennabe 18 mit einem Kunststoff-Isolationsmaterial 14 beschichtet ist. Die einseitige Kunststoffbeschichtung bewirkt, dass der Wärmefluss aus der Encoderseite über die Motorwelle abgeführt wird, wobei jedoch die Taktscheibe 13 aufgrund der Isolationswirkung der Kunststoffschicht unbeeinflusst bleibt.

In der Darstellung nach Figur 6 ist die erfindungsgemäße Taktscheibenbefestigung in Rückansicht dargestellt, wobei die Taktscheibennabe 18 über die umgebogenen Nasen 15, 16, 17 dauerhaft mit der Taktscheibe 3 verbunden ist.

Grundsätzlich lassen sich auch reflektierende Taktscheiben verwenden. Dabei wird eine metallische Zwischenschicht zur Reflexion des Sensorsignals genutzt. Diese Zwischenschicht kann vorteilhafter Weise auch die Wärmestrahlung reflektieren, so dass die Temperatureinflüsse von der Motorseite her abgeschirmt werden.

## Patentansprüche

1. Taktscheibenbefestigung für ein Encodersystem bestehend aus einer Taktscheibennabe (1), die auf einer Motorwelle (2) aufsteckbar ist und an der eine Taktscheibe (3) befestigt ist, **dadurch gekennzeichnet, dass** die Taktscheibennabe aus einem metallischen und wärmeleitenden Werkstoff besteht, der einseitig mit einem Kunststoff-Isolationsmaterial (4) zumindest abschnittsweise beschichtet ist,
und dass in der Flanschebene (1a) der Taktscheibennabe (1) Vorsprünge oder Nasen (5, 6, 7) angeordnet sind, die in entsprechend ausgebildeten Vertiefungen, Aussparungen oder Einschnitten (3a, 3b) der Taktscheibe (3) eingreifen.

2. Taktscheibenbefestigung nach Anspruch 1, **dadurch gekennzeichnet, dass** die Kunststoffbeschichtung (4) auf der der Taktscheibe (3) zugewandten Seite (1 b) der Taktscheibennabe (1) angeordnet ist.

3. Taktscheibenbefestigung nach einem der vorhergehenden Ansprüche, **dadurch gekennzeichnet, dass** die Kunststoffbeschichtung aus einem Film, einer Folie oder einem Lack besteht.

4. Taktscheibenbefestigung nach einem der vorhergehenden Ansprüche, **dadurch gekennzeichnet, dass** die Kunststoffbeschichtung selbstklebend oder selbsthaftend ist.

5. Taktscheibenbefestigung nach einem der vorhergehenden Ansprüche, **dadurch gekennzeichnet, dass** die Vorsprünge (5, 6, 7) als Haken, Noppen, Nasen oder abgebogene Blechstreifen ausgebildet sind.

6. Taktscheibenbefestigung nach einem der vorhergehenden Ansprüche, **dadurch gekennzeichnet, dass** eine reflektierende Taktscheibe zur Abschirmung gegenüber den motorseitigen Temperatureinflüssen verwendet wird.

7. Taktscheibenbefestigung nach einem der vorhergehenden Ansprüche, **dadurch gekennzeichnet, dass** zwischen Motorwelle (2) und Taktscheibe (3) eine Isolierschicht (14) angeordnet ist.

8. Taktscheibenbefestigung nach einem der vorhergehenden Ansprüche, **dadurch gekennzeichnet, dass** die Isolierschicht (14) auf der zur Taktscheibe (13) gewandten Seite der Taktscheibennabe (18) angeordnet ist.

9. Taktscheibenbefestigung nach einem der vorhergehenden Ansprüche, **dadurch gekennzeichnet, dass** die Taktscheibennabe als Blechformteil ausgebildet ist.

10. Taktscheibenbefestigung nach einem der vorhergehenden Ansprüche, **dadurch gekennzeichnet, dass** die mit einer Kunststoffschicht isolierte Taktscheibennabe durch Umformung verfestigt und mit Vorsprüngen oder Nasen (5, 6, 7, 15, 16, 17) zu einer Taktscheibenbefestigungs- und -zentriereinrichtung ausgebildet ist.
